# EUROPÄISCHE PATENTANMELDUNG

(11) **EP 4 332 416 A1**
(43) Veröffentlichungstag der Anmeldung: **06.03.2024**
(21) Anmeldenummer: 23187973.5
(22) Anmeldetag: 27.07.2023
(51) Int. Cl.: F16K 1/226, H01M 8/04089

(54) **STELLKLAPPENBAUGRUPPE FÜR EINEN GASSTROM IN EINEM BRENNSTOFFZELLENSYSTEM**

(30) Priorität: 01.09.2022 DE 102022122103
(71) Anmelder: Purem GmbH, 66539 Neunkirchen (DE)
(72) Erfinder: Lory, Markus, 70182 Stuttgart (DE); Grün, Matthias, Altbach (DE); Wacker, Andreas, Plochingen (DE); Hammer, Jochen, Stuttgart (DE); Birgler, Markus, Wernau (DE); Zeumer, Annika, Wernau (DE)
(74) Vertreter: Ruttensperger Lachnit Trossin Gomoll

(57) **Zusammenfassung**

Eine Stellklappenbaugruppe für einen Gasstrom in einem Brennstoffzellensystem, insbesondere in einem Fahrzeug, umfasst ein einen Gasströmungskanal (46) bereitstellendes Stellklappengehäuse (14), eine in dem Stellklappengehäuse (14) zwischen einer eine Gasströmung durch den Gasströmungskanal (46) im Wesentlichen unterbindenden Schließstellung und wenigstens einer den Gasströmungskanal (46) zur Durchströmung freigebenden Offenstellung verstellbaren Stellklappe (16) mit einem scheibenartigen Stellklappenkörper (24), wobei an dem Stellklappengehäuse (14) ein Stellklappensitz (26) vorgesehen ist und an der Stellklappe (16) ein in der Schließstellung der Stellklappe (16) an dem Stellklappensitz (26) anliegender Abschlussbereich (40) vorgesehen ist, wobei der Abschlussbereich (40) an einem Außenumfangsbereich des Stellklappenkörpers (24) elastisches Dichtmaterial (54) umfasst.

## Beschreibung

Die vorliegende Erfindung betrifft eine Stellklappenbaugruppe für einen Gasstrom in einem Brennstoffzellensystem, das beispielsweise in einem Fahrzeug eingesetzt werden kann, um elektrische Energie bereitzustellen.

In derartigen Brennstoffzellensystemen ist es erforderlich, abhängig vom Betriebszustand, verschiedene Gasströme durch den Anodenbereich bzw. den Kathodenbereich einer Brennstoffzelle bzw. eines Brennstoffzellenstapels hindurch zu leiten bzw. daran vorbei zu leiten. Dabei besteht eine hohe Anforderung an die Dichtigkeit von zur Regulierung derartiger Gasströme eingesetzten Stellklappenbaugruppen, um zu gewährleisten, dass insbesondere in Betriebszuständen, in welchen ein bestimmter Gasstrom nicht durch eine Brennstoffzelle oder nicht an einer Brennstoffzelle vorbei geleitet werden soll, Leckageströme ausgeschlossen werden können bzw. im wesentlichen kein Gas zur Umgebung entweichen kann.

Es ist die Aufgabe der vorliegenden Erfindung, eine Stellklappenbaugruppe für einen Gasstrom in einem Brennstoffzellensystem, insbesondere in einem Fahrzeug, bereitzustellen, welche bei konstruktiv einfacher Ausgestaltung Gasleckagen im Wesentlichen verhindern kann.

Erfindungsgemäß wird diese Aufgabe gelöst durch eine Stellklappenbaugruppe für einen Gasstrom in einem Brennstoffzellensystem, insbesondere in einem Fahrzeug, umfassend ein einen Gasströmungskanal bereitstellendes Stellklappengehäuse, eine in dem Stellklappengehäuse zwischen einer eine Gasströmung durch den Gasströmungskanal im Wesentlichen unterbindenden Schließstellung und wenigstens einer den Gasströmungskanal zur Durchströmung freigebenden Offenstellung verstellbaren Stellklappe mit einem scheibenartigen Stellklappenkörper, wobei an dem Stellklappengehäuse ein Stellklappensitz vorgesehen ist und an der Stellklappe ein in der Schließstellung der Stellklappe an dem Stellklappensitz anliegender Abschlussbereich vorgesehen ist, wobei der Abschlussbereich an einem Außenumfangsbereich des Stellklappenkörpers elastisches Dichtmaterial, insbesondere Elastomermaterial, z.B. EPDM, umfasst.

Durch das Bereitstellen von elastischem Dichtmaterial am Abschlussbereich der Stellklappe kann sichergestellt werden, dass unabhängig von Fertigungstoleranzen und auch unabhängig von thermisch induzierten Dimensionsänderungen von Bauteilen der Stellklappenbaugruppe in der Schließstellung ein im Wesentlichen vollständiger Abschluss des im Stellklappengehäuse gebildeten Gasströmungskanals gegen die Durchströmung mit Gas erreicht wird.

Um insbesondere dort, wo die Stellklappe bzw. der Stellklappenkörper in Wechselwirkung mit dem Stellklappensitz tritt, die Abschlusswirkung des elastischen Dichtmaterials nutzen zu können, wird vorgeschlagen, dass an dem Außenumfangsbereich des Stellklappenkörpers wenigstens ein mit dem Dichtmaterial aufgebauter Dichtmaterialkörper angeordnet ist. Der Stellklappenkörper selbst kann mit im Wesentlichen starrem, bezüglich des durch das Stellklappengehäuse zu leitenden Gases resistentem Material, zum Beispiel Kunststoff oder Metall, ausgebildet werden.

Da durch das Dichtmaterial im Wesentlichen nur dort, wo der Stellklappenkörper in Wechselwirkung mit dem Stellklappensitz tritt, eine Dichtwirkung bereitzustellen ist, kann der wenigstens eine Dichtmaterialkörper entlang wenigstens eines Teils des Außenumfangsbereichs des Stellklappenkörpers sich ringartig erstreckend ausgebildet sein.

Der Stellklappenkörper kann eine erste Stirnseite und eine von der ersten Stirnseite abgewandte zweite Stirnseite aufweisen, und der wenigstens eine Dichtmaterialkörper kann einen an der ersten Stirnseite angeordneten ersten Dichtmaterialkörperabschnitt, einen an der zweiten Stirnseite angeordneten zweiten Dichtmaterialkörperabschnitt und wenigstens einen den ersten Dichtmaterialkörperabschnitt mit dem zweiten Dichtmaterialkörperabschnitt verbindenden Dichtmaterialverbindungsabschnitt umfassen.

Für einen stabilen Zusammenhalt der beiden Dichtmaterialkörperabschnitte wird vorgeschlagen, dass der wenigstens eine Dichtmaterialkörper eine Mehrzahl von in einer Umfangsrichtung um einen Zentralbereich der Stellklappe entlang des Außenumfangsbereichs des Stellklappenkörpers aufeinander folgend angeordneten Dichtmaterialverbindungsabschnitten umfasst, oder/und dass der wenigstens eine Dichtmaterialkörper eine Mehrzahl von bezüglich des Zentralbereichs der Stellklappe radial gestaffelt angeordneten Dichtmaterialverbindungsabschnitten umfasst.

Ferner kann eine auch zu einem Formschluss zwischen dem Dichtmaterialkörper und dem Stellklappenkörper führende stabile Struktur dadurch unterstützt werden, dass der wenigstens eine Dichtmaterialkörper mit dem ersten Dichtmaterialkörperabschnitt, dem zweiten Dichtmaterialkörperabschnitt und dem wenigstens einen Dichtmaterialverbindungsabschnitt einstückig ausgebildet ist. Es ist darauf hinzuweisen, dass einstückig im Sinne der vorliegenden Erfindung bedeutet, dass der Dichtmaterialkörper mit seinen verschiedenen Abschnitten als ein einziger Materialblock, also monolithisch, und nicht durch das Zusammenfügen getrennt hergestellter Bauteile bereitgestellt wird.

Dies kann beispielsweise dadurch erreicht werden, dass der wenigstens eine Dichtmaterialkörper durch Anformen an den Stellklappenkörper ausgebildet ist.

Für eine stabile Anbindung des wenigstens einen Dichtmaterialkörpers an den Stellklappenkörper kann wenigstens ein Dichtmaterialverbindungsabschnitt eine Öffnung in dem Stellklappenkörper durchsetzen oder/und kann wenigstens ein Dichtmaterialverbindungsabschnitt eine Außenumfangsseite des Stellklappenkörpers übergreifen.

Für eine weiter verbesserte Dichtwirkung unter Ausnutzung der Elastizität des Dichtmaterials wird vorgeschlagen, dass der wenigstens eine Dichtmaterialkörper am ersten Dichtmaterialkörperabschnitt oder am zweiten Dichtmaterialkörperabschnitt wenigstens eine entlang des Außenumfangsbereichs des Stellklappenkörpers sich erstreckende Dichtlippe umfasst, wobei bei in der Schließstellung positionierter Stellklappe die wenigstens eine Dichtlippe am Stellklappensitz anliegt.

Bei einer einfach zu realisierenden Ausgestaltungsart der erfindungsgemäßen Stellklappenbaugruppe kann der Stellklappenkörper einen ersten Klappenflügel und einen zweiten Klappenflügel aufweisen, wobei der erste Klappenflügel in der Schließstellung der Stellklappe mit dem an der ersten Stirnseite des Stellklappenkörpers angeordneten ersten Dichtmaterialkörperabschnitt am Stellklappensitz anliegt und der zweite Klappenflügel in der Schließstellung der Stellklappe mit dem an der zweiten Stirnseite des Stellklappenkörpers angeordneten zweiten Dichtmaterialkörperabschnitt am Stellklappensitz anliegt.

Um in einfacher Weise die verschiedenen Klappenflügel definiert hinsichtlich der mit diesen zusammenwirkenden Abschnitte des Stellklappensitzes positionieren zu können, wird vorgeschlagen, dass der erste Klappenflügel durch ein erstes Stellklappenkörperteil bereitgestellt ist und der zweite Klappenflügel durch ein vom ersten Stellklappenkörperteil getrennt ausgebildetes zweites Stellklappenkörperteil bereitgestellt ist.

Dabei kann die an verschiedenen Stirnseiten zu realisierende Dichtwirkung des Dichtmaterials in einfacher Art und Weise dadurch erreicht werden, dass am ersten Klappenflügel ein erster Dichtmaterialkörper vorgesehen ist und am zweiten Klappenflügel ein vom ersten Dichtmaterialkörper getrennt ausgebildeter zweiter Dichtmaterialkörper vorgesehen ist.

Bei einer alternativen Ausgestaltungsart kann der Dichtmaterialkörper sich im Wesentlichen entlang des gesamten Außenumfangsbereichs des Stellklappenkörpers erstrecken, wobei in der Schließstellung der Stellklappe nur der an der ersten Stirnseite des Stellklappenkörpers angeordnete erste Dichtmaterialkörperabschnitt oder nur der an der zweiten Stirnseite des Stellklappenkörpers angeordnete zweite Dichtmaterialkörperabschnitt am Stellklappensitz anliegt.

Dabei kann für einen einfach gestalteten Aufbau der Stellklappenkörper einstückig oder/und in Form einer kreisartigen Scheibe ausgebildet sein.

Um die Stellklappe zwischen der Schließstellung und der wenigstens einen Offenstellung bewegen zu können, wird vorgeschlagen, dass der Stellklappenkörper an einer Schwenkwelle getragen ist, und dass durch Drehen der Schwenkwelle um eine Schwenkwellenachse die Stellklappe zwischen der Schließstellung und der wenigstens einen Offenstellung verstellbar ist.

Die Erfindung betrifft ferner ein Brennstoffzellensystem, insbesondere für ein Fahrzeug, umfassend wenigstens eine erfindungsgemäß aufgebaute Stellklappenbaugruppe.

Die Erfindung wird nachfolgend mit Bezug auf die beiliegenden Figuren detailliert beschrieben. Es zeigt:
- Fig. 1: eine Prinzipskizze eines Brennstoffzellensystems eines Fahrzeugs;
- Fig. 2: eine Stellklappenbaugruppe für ein Brennstoffzellensystem;
- Fig. 3: eine Längsschnittansicht eines Stellklappengehäuses mit einer darin aufgenommenen Stellklappe;
- Fig. 4: eine perspektivische Ansicht eines Stellkappenkörpers der Stellklappe der Fig. 3;
- Fig. 5: den Stellklappenkörper der Fig. 4 mit einem an einem Außenumfangbereich desselben angeordneten Dichtmaterialkörper;
- Fig. 6: eine der Fig. 3 entsprechende Längsschnittansicht eines Stellklappengehäuses mit einer Stellklappe einer alternativen Ausgestaltung;
- Fig. 7: ein Stellklappenkörperteil der Stellklappe der Fig. 6 mit einem am Außenumfangsbereich desselben angeordneten Dichtmaterialkörper.

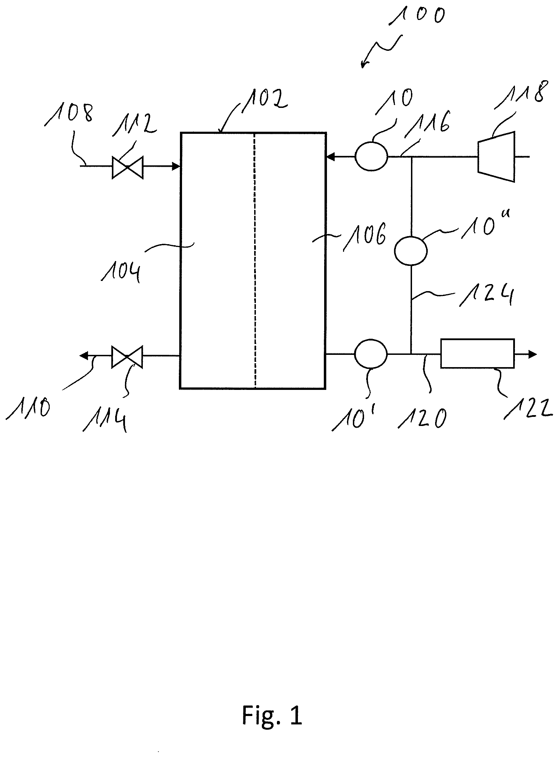

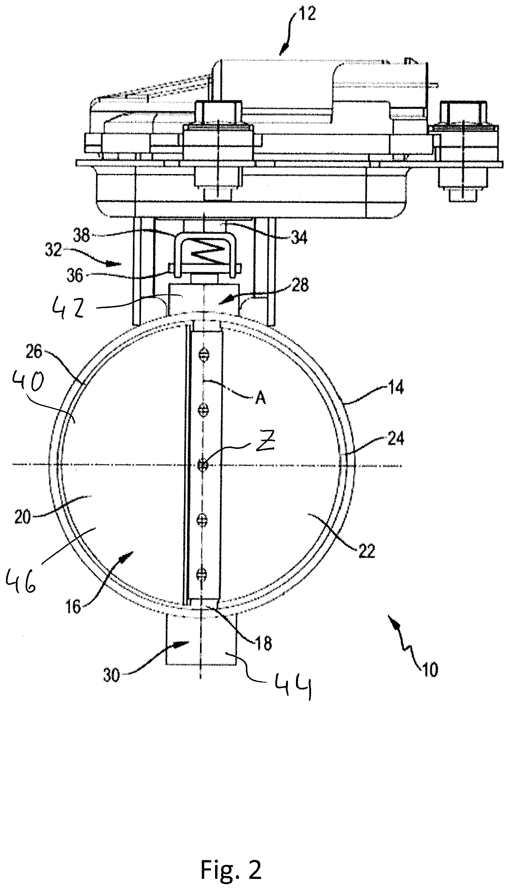

Bevor nachfolgend die erfindungsgemäße Ausgestaltung einer Stellklappenbaugruppe für ein Brennstoffzellensystem insbesondere hinsichtlich einer zum Bereitstellen eines dichten Abschlusses vorgesehenen Struktur derselben detailliert beschrieben wird, wird mit Bezug auf die Fig. 1 der grundsätzliche Aufbau eines Brennstoffzellensystems beschrieben, mit welchem in einem Fahrzeug elektrische Energie bereitgestellt werden kann, und wird mit Bezug auf die Fig. 2 der grundsätzliche Aufbau einer Stellklappenbaugruppe erläutert, mit welcher insbesondere im Zuordnung zum Kathodenbereich eines derartigen Brennstoffzellensystems der Gasstrom reguliert bzw. der Kathodenbereich gegen Durchströmung abgeschlossen werden kann.

Das in Figur 1 dargestellte Brennstoffzellensystem 100 umfasst als wesentlichen Systembereich eine allgemein mit 102 bezeichnete Brennstoffzelle mit einem mit Wasserstoff bzw. einem Wasserstoff enthaltenden Gas zu speisenden Anodenbereich 104 und einem mit Sauerstoff bzw. einem Sauerstoff enthaltenden Gas, zum Beispiel Luft, zu speisenden Kathodenbereich 106.

Dem Anodenbereich 104 sind eine Zuführleitung 108 und eine Abführleitung 110 mit jeweiligen Ventilen 112, 114 zugeordnet, um den Wasserstoff bzw. das Wasserstoff enthaltende Gas in den Anodenbereich 104 einleiten zu können bzw. Anodenabgas aus diesem ableiten zu können und erforderlichenfalls den Anodenbereich 104 vollständig abschließen zu können.

Dem Kathodenbereich 106 ist eine Zuführleitung 116 zugeordnet, über welche beispielsweise vermittels eines Kompressors 118 oder dergleichen das Sauerstoff enthaltende Gas, also beispielsweise Luft, in diesen eingeleitet werden kann. In der Zuführleitung 116 ist eine allgemein mit 10 bezeichnete Stellenklappenbaugruppe vorgesehen, mit welcher der Gasstrom über die Zuführleitung 116 reguliert bzw. der Kathodenbereich 106 in seinem Einleitbereich im Wesentlichen gasdicht abgeschlossen werden kann.

Zum Ableiten von Kathodenabgas ist dem Kathodenbereich 106 eine Abführleitung 120 zugeordnet. Diese führt zu einer Brennstoffzellen-Abgasanlage 122, in welcher beispielsweise vermittels eines Wasserabscheiders im Kathodenabgas enthaltenes Wasser abgeschieden werden kann. Ferner ist in der Abführleitung 120 eine weitere Stellklappenbaugruppe 10' angeordnet, vermittels welcher die Abführleitung 120 und somit ein Ableitbereich des Kathodenbereichs 106 im Wesentlichen gasdicht abgeschlossen werden können.

Zwischen der Zuführleitung 116 und der Abführleitung 120 des Kathodenbereichs 106 verläuft eine Bypassleitung 124. Auch in der Bypassleitung 124 ist eine Stellklappenbaugruppe 10" angeordnet, mit welcher der Gasstrom über die Bypassleitung 124 reguliert werden kann bzw. die Bypassleitung 124 im Wesentlichen gasdicht abgeschlossen werden kann.

Es ist darauf hinzuweisen, dass der in Figur 1 dargestellte und vorangehend beschriebene Aufbau des Brennstoffzellensystems 100 nur ein Beispiel einer Vielzahl verschiedener Möglichkeiten der Zufuhr und Abfuhr von Gas insbesondere am Kathodenbereich 106 veranschaulicht. Maßgeblich ist, dass in Zuordnung zu dem Kartonbereich 106 zumindest eine, gegebenenfalls mehrere Stellklappenbaugruppen 10, 10`, 10" vorgesehen sind, wobei dann, wenn mehrere derartige Stellklappenbaugruppen 10, 10`, 10" vorgesehen sind, diese zu einander grundsätzlich baugleich sein können oder abhängig davon, in welchem Bereich sie positioniert sind und welches Ausmaß an Gasdichtigkeit durch diese bereitzustellen ist, auch unterschiedlich gestaltet sein können.

Die in Fig. 2 dargestellte und beispielsweise in dem Brennstoffzellensystem 100 der Fig. 1 eingesetzte Stellklappenbaugruppe 10 umfasst einen beispielsweise elektromotorischen Stellklappenantrieb 12 und in einem rohrartig ausgebildeten und einen Gasströmungskanal 46 umgrenzenden Stellklappengehäuse 14 eine allgemein mit 16 bezeichnete Stellklappe.

Die Stellklappe 16 umfasst einen an einer Schwenkwelle 18 um eine Schwenkwellenachse A schwenkbar getragenen, scheibenartigen Stellklappenkörper 24 mit zwei jeweils einen Klappenflügel bereitstellenden Stellklappenkörperteilen 20, 22. In Zuordnung zu der Stellklappe 16 ist am Stellklappengehäuse 14 ein Stellklappensitz 26 vorgesehen, an welchem die Stellklappe 16 in einer Schließstellung derselben mit einem bezüglich eines Zentralbereichs Z der Stellklappe 16 bzw. des Stellklappenkörpers 24 radial außen liegenden Abschlussbereich 40 anliegt.

Zum Bewegen der Stellklappe 16 zwischen der Schließstellung und einer vollkommen geöffneten Stellung, in welcher der scheibenartige Stellklappenkörper 24 zur Zeichenebene der Fig. 1 im Wesentlichen orthogonal orientiert ist und somit den Gasströmungskanal 46 im Stellklappengehäuse 14 zur Durchströmung im Wesentlichen vollständig freigibt, ist eine Antriebswelle 34 des Stellklappenantriebs 12 vermittels einer Kopplungsanordnung 32 mit der in Lagerbereichen 28, 30 am Stellklappengehäuse 14 um die Schwenkwellenachse A schwenkbar getragenen Schwenkwelle 18 zur gemeinsamen Drehung gekoppelt. Dabei umfasst die Kopplungsanordnung 32 beispielsweise ein mit der Antriebswelle 34 drehfest verbundenes Kopplungsteil 38 und ein mit der Schwenkwelle 18 drehfest verbundenes Kopplungsteil 36, welches mit dem Kopplungsteil 38 in Drehkopplungseingriff steht.

Jeder der beiden Lagerbereiche 28, 30 umfasst eine am Stellklappengehäuse 14 getragene, beispielsweise an einer Außenumfangsfläche desselben durch Verschweißung festgelegte Lagerbuchse 42, 44, in welcher ein jeweiliger axialer Endabschnitt der Schwenkwelle 18 um die Schwenkwellenachse A drehbar aufgenommen ist.

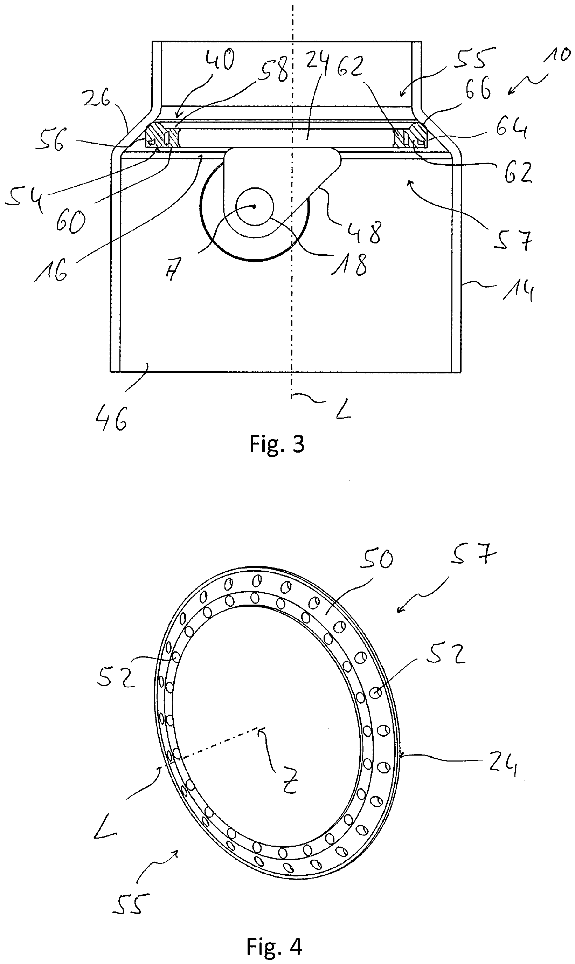

Die Fig. 3 bis 5 zeigen eine erfindungsgemäße Ausgestaltung einer Stellklappenbaugruppe 10 bzw. einer Stellklappe 16 für diese. Bei dem in Fig. 3 dargestellten Aufbau umfasst die Stellkappe 16 einen kreisscheibenartig, einstückig ausgebildeten Stellklappenkörper 24. Dieser ist vermittels einer Trägerstruktur 48 an der Schwenkwelle 18 um die Schwenkachse A aus der in Fig. 3 dargestellten Schließstellung in eine Offenstellung heraus verschwenkbar getragen. Der zur Zusammenwirkung mit der Stellklappe 16 am Stellklappengehäuse 14 vorgesehene Stellklappensitz 26 ist durch einen beispielsweise im Wesentlichen konisch sich verjüngenden Abschnitt des rohrartigen Stellklappengehäuses 14 bereitgestellt.

Am Außenumfangsbereich 50 des Stellklappenkörpers 24 ist eine Mehrzahl von Öffnungen 52 vorgesehen, die im dargestellten Ausgestaltungsbeispiel in zwei radial gestaffelt liegenden ringartigen Formationen angeordnet sind. Insbesondere sind die Öffnungen 52 im Außenumfangsbereich 50 des Stellklappenkörpers 24 angeordnet, in welchem an einer ersten Stirnseite 55 der Stellklappenkörper 24 von radial innen nach radial außen in Richtung zu einer zweiten Stirnseite 57 schräg angestellt ausgebildet ist, so dass in diesem Außenumfangsbereich 50 oder zumindest einem Teil desselben die Dicke des Stellklappenkörpers 24 zwischen der ersten Stirnseite 55 und der zweiten Stirnseite 57 von radial innen nach radial außen abnimmt. An der zweiten Stirnseite 57 kann der Stellklappenkörper 24 beispielsweise über seine gesamte radiale Erstreckung im Wesentlichen plan ausgebildet sein. Der Stellklappenkörper 24 kann in seinem vom Zentralbereich Z bis zum Außenumfangsbereich 50 reichenden Abschnitt im Wesentlichen planar scheibenartig ausgebildet sein. Im Übergang zum Außenumfangsbereich 50 kann der Stellklappenkörper 24 an beiden Stirnseiten 55, 57 einen stufenartigen Übergang bereitstellen, so dass nach radial außen die Dicke des Stellklappenkörpers 24 an beiden Stirnseiten 55, 57 stufenartig abnimmt.

In dem Außenumfangsbereich 50 des Stellklappenkörpers 24 ist im Wesentlichen den Abschlussbereich 40 der Stellklappe 16 bereitstellendes, elastisch verformbares Dichtmaterial 54, beispielsweise Elastomermaterial, wie z.B. EPDM, angeordnet. Das Dichtmaterial 54 ist in Form eines entlang des Außenumfangsbereichs 50 sich erstreckenden und diesen radial überdeckenden ringartigen Dichtmaterialkörpers 56 bereitgestellt. Dieser weist an der ersten Stirnseite 55 einen ringartigen ersten Dichtmaterialkörperabschnitt 58 auf und weist an der zweiten Stirnseite 57 einen ringartigen zweiten Dichtmaterialkörperabschnitt 60 auf. Durch eine Mehrzahl von die Öffnungen 52 durchsetzenden Verbindungsabschnitten 62 sind der erste Dichtmaterialkörperabschnitt 58 und der zweite Dichtmaterialkörperabschnitt 60 miteinander verbunden. Durch einen weiteren, den Stellklappenkörper 24 radial außen axial übergreifenden Verbindungsabschnitt 64 sind die beiden Dichtmaterialkörperabschnitte 58, 60 in ihrem Außenumfangsbereich über den gesamten Umfang miteinander verbunden.

Der Dichtmaterialkörper 56 ist beispielsweise durch Anformen des Dichtmaterials 54 an den Außenumfangsbereich 50 des Stellklappenkörpers 24 einstückig, als ein einziger, monolithisch aufgebauter Materialblock bereitgestellt. Dabei ist der Dichtmaterialkörper 56 am Stellklappenkörper 24 radial außen angrenzend an die an den beiden Stirnseiten 55, 57 gebildeten stufenartigen Übergänge so angeformt, dass an den beiden Stirnseiten 55, 57 der Dichtmaterialkörper 56 im Wesentlichen stufenfrei an die Oberflächen des radial innerhalb des Außenumfangsbereichs 50 sich erstreckenden Abschnitts des Stellklappenkörpers 24 anschließt.

Zur Dichtwechselwirkung mit dem am Stellklappengehäuse 14 vorgesehenen Stellklappensitz 26 ist an dem Dichtmaterialkörper 56 an der zur Wechselwirkung mit dem Stellklappensitz 26 vorgesehenen ersten Stirnseite 55 des Stellklappenkörpers 24 eine über den gesamten Umfang vorzugsweise unterbrechungsfrei durchlaufende Dichtlippe 66 vorgesehen. In der in Fig. 3 dargestellten Schließstellung liegt der Dichtmaterialkörper 56 mit der Dichtlippe 66 am Stellklappensitz 26 an bzw. ist mit dieser gegen den Stellklappensitz 26 gepresst, so dass aufgrund der Elastizität des Dichtmaterials 54 und somit dessen Verformbarkeit ein im Wesentlichen vollkommen gasdichter Abschluss des Gasströmungskanals 46 erreicht ist.

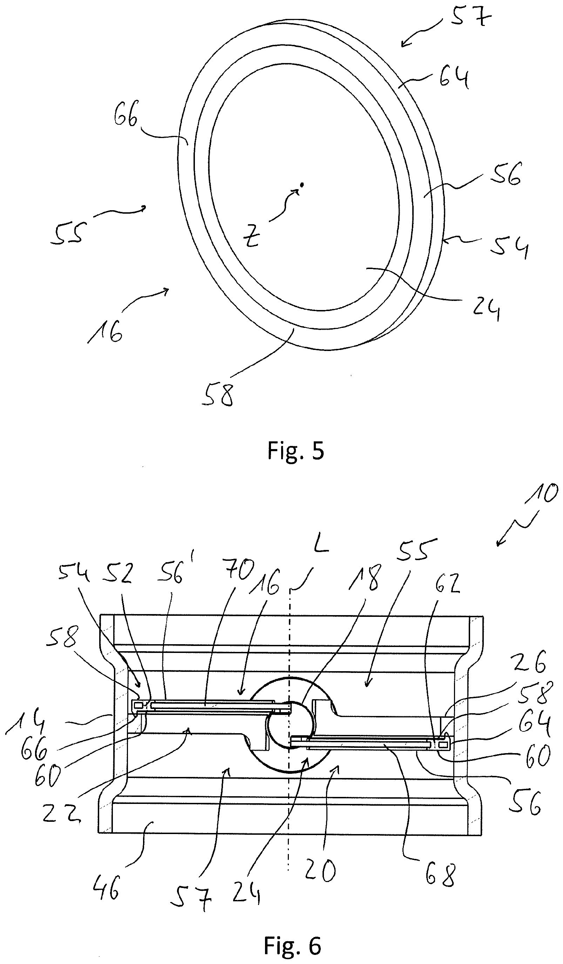

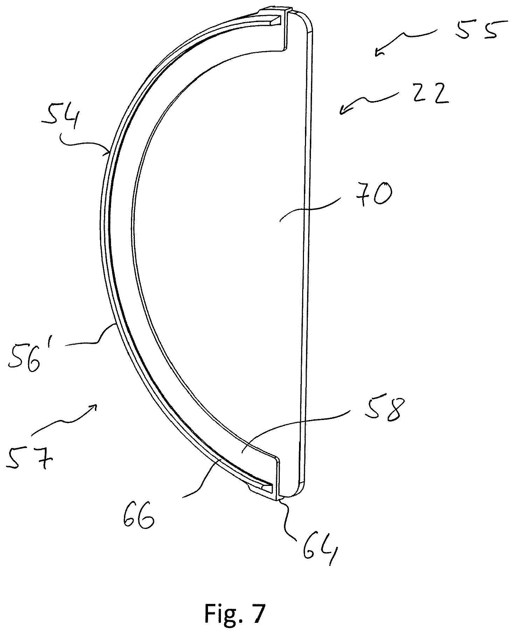

Eine alternative Ausgestaltungsform einer derartigen Stellklappenbaugruppe 10 ist in den Fig. 6 und 7 dargestellt. Bei dieser Ausgestaltungsform weist die Stellklappe 16 einen mit zwei jeweils ein Stellklappenkörperteil 20 bzw. 22 bereitstellenden Klappenflügeln 68, 70 aufgebauten Stellklappenkörper 24 auf. An jedem der Klappenflügel 68, 70 ist ein Dichtmaterialkörper 56 bzw. 56` des Dichtmaterials 54 im Außenumfangsbereich 50 des mit den beiden Klappenflügeln 68, 70 aufgebauten Stellklappenkörpers 24 vorgesehen. Der am ersten Klappenflügel 68 vorgesehene erste Dichtmaterialkörper 56 erstreckt sich nahezu über den gesamten an dem ersten Klappenflügel 68 vorgesehenen Abschnitt des Außenumfangsbereichs 50 des Stellklappenkörpers 24, und der am zweiten Klappenflügel 70 vorgesehene zweite Dichtmaterialkörper 56` erstreckt sich entsprechend nahezu über den gesamten am zweiten Klappenflügel 70 vorgesehenen Bereich des Außenumfangsbereichs 50 des Stellklappenkörpers 24. Insbesondere erstrecken die beiden Dichtmaterialkörper 56, 56' sich in Umfangsrichtung jeweils so weit, dass sie mit ihren Umfangsenden unmittelbar anschließend an die Schwenkwelle 18 enden, so dass zwischen dem Außenumfangsbereich der Schwenkwelle 18 und den Dichtmaterialkörpern 56, 56' kein zu einer Leckage führende Zwischenraum verbleibt.

Jeder der beiden Dichtmaterialkörper 56, 56' kann in einer der vorangehend mit Bezug auf die Ausgestaltungsform der Fig. 3 bis 5 beschriebenen Ausgestaltung entsprechenden Konfiguration am jeweils zugeordneten Klappenflügel 68, 70 vorzugsweise durch Anformen des Dichtmaterials 54 bereitgestellt sein. Wie die Fig. 6 veranschaulicht, weisen auch die Klappenflügel 68, 70 die Öffnungen 52 auf, in welchen Verbindungsabschnitte 62 die an den beiden Stirnseiten 55, 57 des Stellklappenkörpers 24 liegenden Dichtmaterialkörperabschnitte 58, 60 miteinander verbunden sind. Gleichermaßen kann ein den Stellklappenkörper 24 bzw. einen jeweiligen Klappenflügel 68, 70 radial außen umgreifender Verbindungsabschnitt 64 vorgesehen sein, um die an den beiden Stirnseiten 55, 57 des Stellklappenkörpers 24 bzw. des jeweiligen Klappenflügels 68, 70 liegenden Dichtmaterialkörperabschnitte 58, 60 miteinander zu verbinden.

Man erkennt insbesondere in der Darstellung der Fig. 6, dass die beiden Klappenflügel 68, 70 an der Schwenkwelle 18 derart angeordnet sind, dass sie in Richtung einer Längsachse L des Stellklappengehäuses 14 zueinander versetzt liegen und somit an unterschiedlichen axialen Seiten des am Innenumfang des Stellklappengehäuses 14 vorgesehenen Stellklappensitzes 26 anliegen. Beim Verschwenken der Stellklappe 16 aus der in Fig. 6 dargestellten Schließstellung, durch Drehen der Schwenkwelle 18 im Uhrzeigersinn in Fig. 6 bewegt jeder der Klappenflügel 68, 70 sich von dem diesem jeweils zugeordneten Abschnitt des Stellklappensitzes 26 weg. Da dabei die beiden Klappenflügel 68, 70 sich im Wesentlichen in entgegengesetzten Richtungen vom jeweils zugeordneten Abschnitt des Stellklappensitzes 26 weg bewegen, ist die Ausgestaltung der ersten bzw. zweiten Dichtmaterialabschnitte 58, 60, an welchen, so wie auch vorangehend bereits beschrieben, die Dichtlippe 66 ausgebildet sein kann, an den beiden Klappenflügeln 68, 70 zu den beiden Stirnseiten 55, 57 des Stellklappenkörpers 24 unterschiedlich. Während bei dem in Fig. 6 rechts erkennbaren Stellklappenflügel 68 der erste Dichtmaterialkörperabschnitt 58 und die daran vorgesehene Dichtlippe 56 an der dem Stellklappensitz 26 zugewandt liegenden ersten Stirnseite 55 des mit den beiden Klappenflügeln 68, 70 aufgebauten Stellklappenkörpers 24 angeordnet sind und dementsprechend der zweite Dichtmaterialkörperabschnitt 60 an der vom Stellklappensitz 26 abgewandt liegenden zweiten Stirnseite 57 des Stellklappenkörpers 24 positioniert ist, ist bei dem in Fig. 6 links dargestellten zweiten Klappenflügel 70 der erste Dichtmaterialkörperabschnitt 58 an der vom Stellklappensitz 26 abgewandt ersten Stirnseite 55 angeordnet, und der zweite Dichtmaterialkörperabschnitt mit der daran vorgesehene Dichtlippe 66 ist an der dem Stellklappensitz 26 zugewandten zweiten Stirnseite 57 des Stellklappenkörpers 24 angeordnet. Dies bedeutet, dass bei dem ersten Klappenflügel 68 das Dichtmaterial 54 bzw. der Dichtmaterialkörper 56 mit seinem an der ersten Stirnseite 55 des Stellklappenkörpers 24 liegenden ersten Dichtmaterialkörperabschnitt 58 so geformt ist wie bei dem zweiten Klappenflügel 60 der an der zweiten Stirnseite 57 des Stellklappenkörpers 24 liegende zweite Dichtmaterialkörperabschnitt. Dies gestattet es, für den Aufbau des Stellklappenkörpers 24 zwei grundsätzlich identisch gestaltete bzw. identisch mit dem Dichtmaterial 54 versehene Klappenflügel 68, 70 zu verwenden und diese in zueinander entgegengesetzter Orientierung in das Stellklappengehäuse 14 einzugliedern.

Auch mit dem in den Fig. 6 und 7 dargestellten Aufbau einer Stellklappenbaugruppe 10 wird in der in Fig. 6 dargestellten Schließstellung der Stellklappe 16 ein im Wesentlichen vollkommen gasdichter Abschluss des im Stellklappengehäuse 14 gebildeten Gasströmungskanals 46 erreicht. Dieser ist, wie eingangs dargestellt, von besonderem Vorteil bzw. erforderlich, um insbesondere in Zuordnung zum Kathodenbereich 106 der Brennstoffzelle 102 einen zuverlässigen gasdichten Abschluss gewährleisten zu können.

## Patentansprüche

1. Stellklappenbaugruppe für einen Gasstrom in einem Brennstoffzellensystem, insbesondere in einem Fahrzeug, umfassend ein einen Gasströmungskanal (46) bereitstellendes Stellklappengehäuse (14), eine in dem Stellklappengehäuse (14) zwischen einer eine Gasströmung durch den Gasströmungskanal (46) im Wesentlichen unterbindenden Schließstellung und wenigstens einer den Gasströmungskanal (46) zur Durchströmung freigebenden Offenstellung verstellbaren Stellklappe (16) mit einem scheibenartigen Stellklappenkörper (24), wobei an dem Stellklappengehäuse (14) ein Stellklappensitz (26) vorgesehen ist und an der Stellklappe (16) ein in der Schließstellung der Stellklappe (16) an dem Stellklappensitz (26) anliegender Abschlussbereich (40) vorgesehen ist, wobei der Abschlussbereich (40) an einem Außenumfangsbereich (50) des Stellklappenkörpers (24) elastisches Dichtmaterial (54) umfasst.

2. Stellklappenbaugruppe nach Anspruch 1, **dadurch gekennzeichnet, dass** an dem Außenumfangsbereich (50) des Stellklappenkörpers (24) wenigstens ein mit dem Dichtmaterial (54) aufgebauter Dichtmaterialkörper (56, 56`) angeordnet ist.

3. Stellklappenbaugruppe nach Anspruch 2, **dadurch gekennzeichnet, dass** der wenigstens eine Dichtmaterialkörper (56, 56`) entlang wenigstens eines Teils des Außenumfangsbereichs (50) des Stellklappenkörpers (24) sich ringartig erstreckend ausgebildet ist.

4. Stellklappenbaugruppe nach Anspruch 2 oder 3, **dadurch gekennzeichnet, dass** der Stellklappenkörper (24) eine erste Stirnseite (55) und eine von der ersten Stirnseite (55) abgewandte zweite Stirnseite (57) aufweist, und dass der wenigstens eine Dichtmaterialkörper (56, 56`) einen an der ersten Stirnseite (55) angeordneten ersten Dichtmaterialkörperabschnitt (58), einen an der zweiten Stirnseite (57) angeordneten zweiten Dichtmaterialkörperabschnitt (60) und wenigstens einen den ersten Dichtmaterialkörperabschnitt (58) mit dem zweiten Dichtmaterialkörperabschnitt (60) verbindenden Dichtmaterialverbindungsabschnitt (62, 64) umfasst.

5. Stellklappenbaugruppe nach Anspruch 4, **dadurch gekennzeichnet, dass** der wenigstens eine Dichtmaterialkörper (56, 56`) eine Mehrzahl von in einer Umfangsrichtung um einen Zentralbereich (Z) der Stellklappe (16) entlang des Außenumfangsbereichs (50) des Stellklappenkörpers (24) aufeinanderfolgend angeordneten Dichtmaterialverbindungsabschnitten (62) umfasst, oder/und dass der wenigstens eine Dichtmaterialkörper (56, 56`) eine Mehrzahl von bezüglich des Zentralbereichs (Z) der Stellklappe (16) radial gestaffelt angeordneten Dichtmaterialverbindungsabschnitten (62) umfasst.

6. Stellklappenbaugruppe nach Anspruch 4 oder 5, **dadurch gekennzeichnet, dass** der wenigstens eine Dichtmaterialkörper (56, 56`) mit dem ersten Dichtmaterialkörperabschnitt (58), dem zweiten Dichtmaterialkörperabschnitt (60) und dem wenigstens einen Dichtmaterialverbindungsabschnitt (62, 64) einstückig ausgebildet ist.

7. Stellklappenbaugruppe nach Anspruch 6, **dadurch gekennzeichnet, dass** der wenigstens eine Dichtmaterialkörper (56, 56`) durch Anformen an den Stellklappenkörper (24) ausgebildet ist.

8. Stellklappenbaugruppe nach einem der Ansprüche 4-7, **dadurch gekennzeichnet, dass** wenigstens ein Dichtmaterialverbindungsabschnitt (62) eine Öffnung (52) in dem Stellklappenkörper (24) durchsetzt, oder/und dass wenigstens ein Dichtmaterialverbindungsabschnitt (64) eine Außenumfangsseite des Stellklappenkörpers (24) übergreift.

9. Stellklappenbaugruppe nach einem der Ansprüche 4-8, **dadurch gekennzeichnet, dass** der wenigstens eine Dichtmaterialkörper (56, 56`) am ersten Dichtmaterialkörperabschnitt (58) oder/und am zweiten Dichtmaterialkörperabschnitt (60) wenigstens eine entlang des Außenumfangsbereichs (50) des Stellklappenkörpers (24) sich erstreckende Dichtlippe (66) umfasst, wobei bei in der Schließstellung positionierter Stellklappe (16) die wenigstens eine Dichtlippe (66) am Stellklappensitz (26) anliegt.

10. Stellklappenbaugruppe nach einem der Ansprüche 4-9, **dadurch gekennzeichnet, dass** der Stellklappenkörper (24) einen ersten Klappenflügel (68) und einen zweiten Klappenflügel (70) aufweist, und dass der erste Klappenflügel (68) in der Schließstellung der Stellklappe (16) mit dem an der ersten Stirnseite (55) des Stellklappenkörpers (24) angeordneten ersten Dichtmaterialkörperabschnitt (58) am Stellklappensitz (26) anliegt und der zweite Klappenflügel (70) in der Schließstellung der Stellklappe (16) mit dem an der zweiten Stirnseite (57) des Stellklappenkörpers (24) angeordneten zweiten Dichtmaterialkörperabschnitt (60) am Stellklappensitz (26) anliegt.

11. Stellklappenbaugruppe nach Anspruch 10, **dadurch gekennzeichnet, dass** der erste Klappenflügel (68) durch ein erstes Stellklappenkörperteil (70) bereitgestellt ist und der zweite Klappenflügel (70) durch ein vom ersten Stellklappenkörperteil (20) getrennt ausgebildetes zweites Stellklappenkörperteil (22) bereitgestellt ist.

12. Stellklappenbaugruppe nach Anspruch 10 oder 11, **dadurch gekennzeichnet, dass** am ersten Klappenflügel (68) ein erster Dichtmaterialkörper (56) vorgesehen ist und am zweiten Klappenflügel (70) ein vom ersten Dichtmaterialkörper (56) getrennt ausgebildeter zweiter Dichtmaterialkörper (56`) vorgesehen ist.

13. Stellklappenbaugruppe nach einem der Ansprüche 4-9, **dadurch gekennzeichnet, dass** der Dichtmaterialkörper (56) sich im Wesentlichen entlang des gesamten Außenumfangsbereichs (50) des Stellklappenkörpers (24) erstreckt, und dass in der Schließstellung der Stellklappe (16) nur der an der ersten Stirnseite (55) des Stellklappenkörpers (24) angeordnete erste Dichtmaterialkörperabschnitt (58) oder nur der an der zweiten Stirnseite (57) des Stellklappenkörpers (24) angeordnete zweite Dichtmaterialkörperabschnitt (60) am Stellklappensitz (26) anliegt.

14. Stellklappenbaugruppe nach Anspruch 13, **dadurch gekennzeichnet, dass** der Stellklappenkörper (34) einstückig oder/und in Form einer kreisartigen Scheibe ausgebildet ist.

15. Stellklappenbaugruppe nach einem der Ansprüche 1-14, **dadurch gekennzeichnet, dass** der Stellklappenkörper (24) an einer Schwenkwelle (18) getragen ist, und dass durch Drehen der Schwenkwelle (18) um eine Schwenkwellenachse (A) die Stellklappe (16) zwischen der Schließstellung und der wenigstens einen Offenstellung verstellbar ist.

16. Brennstoffzellensystem, insbesondere für ein Fahrzeug, umfassend wenigstens eine Stellklappenbaugruppe (10) nach einem der vorangehenden Ansprüche.
